(19) Europäisches Patentamt
European Patent Office
Office européen des brevets

(11) **EP 3 460 205 A1**

(12) **EUROPÄISCHE PATENTANMELDUNG**

(43) Veröffentlichungstag:
**27.03.2019 Patentblatt 2019/13**

(51) Int Cl.:
*F01K 13/00* *(2006.01)*     *F01D 25/10* *(2006.01)*

(21) Anmeldenummer: **17192539.9**

(22) Anmeldetag: **22.09.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Dhima, Rachid**
**45145 Essen (DE)**
• **Kostenko, Yevgen**
**40878 Ratingen (DE)**
• **Veltmann, David**
**45128 Essen (DE)**

(54) **VERFAHREN ZUM BETREIBEN EINER DAMPFTURBINE**

(57)     Die Erfindung betrifft ein Verfahren zur Vermeidung von Kondensation in einer Dampfturbine, in dem eine Heizmatte verwendet wird, die derart betrieben wird, dass die Temperatur des Bauteils, das mit einem heißen Dampf in Berührung kommt, immer über der Sattdampftemperatur liegt, damit keine Kondensation entsteht.

FIG 2

EP 3 460 205 A1

**Beschreibung**

Die Erfindung betrifft ein Verfahren zur Vermeidung von Kondensation an einem Bauteil, wobei das Bauteil mit einem Dampf in Berührung kommt, bei dem unter einer Sattdampftemperatur (T sattdampf) eine Kondensation einsetzt, wobei eine Oberflächen-Temperatur ($T_{Oberfläche}$) des Bauteils ermittelt wird, wobei die Dampf-Temperatur ($T_{Dampf}$) des Dampfes ermittelt wird, wobei eine Wärm-Vorrichtung zum Erwärmen des Bauteils eingesetzt wird.

In Dampfkraftanlagen wird in einem Dampferzeuger unter Zuhilfenahme von fossilen Brennstoffen ein Dampf erzeugt. Dieser Dampf strömt über diverse Leitungen, Ventile und Klappen in eine Dampfturbine. Die Dampfturbine ist in der Regel unterteilt in eine Hochdruck-, Mitteldruck- und Niederdruck-Teilturbine. Die thermische Energie des Dampfes wird in eine Rotationsenergie eines elektrischen Generators umgewandelt. In der Regel werden die Komponenten, wie zum Beispiel die Rohrleitungen, Ventile, Klappen und Dampfturbine, die mit dem heißen Dampf in Berührung kommen, aus einem metallischen Material gefertigt.

Im Betrieb sind in der Regel die metallischen Komponenten derart aufgewärmt, dass eine Kondensation des Dampfes nicht stattfindet. Allerdings sind Betriebsweisen denkbar, wie zum Beispiel beim Anfahren, bei dem die Metalltemperatur noch vergleichsweise niedrig ist. Eine Kondensation könnte hier geschehen, sofern die Metalltemperatur der beaufschlagten Bauteile niedriger ist als die Sättigungstemperatur des Dampfes. Das durch die Kondensation entstandene Wasser könnte Schäden verursachen. So ist es möglich, dass eine einseitige Abkühlung und daraus resultierende Verkrümmung der Komponenten durch Kondensatansammlungen an den Unterteilen von Gehäusen erfolgen kann. Darüber hinaus ist es möglich, dass die Schaufeln in das angesammelte Wasser schlagen können und dadurch beschädigt werden.

Des Weiteren sind Kondensationsschläge in Rohrleitungen mit Folgeschäden an Rohrleitungsaufhängungen und Ausrichtänderungen möglich. Ein weiterer Schaden könnte entstehen, wenn das Kondensat sich in einem Wellendichtungsdampfsystem ansammelt, was zu einer Störung der Wellendichtungsdampfregelung führen kann.

Derzeit wird diese Problematik dadurch gelöst, dass Entwässerungen berücksichtigt werden. Diese Entwässerungen sind derart ausgebildet, dass ein sich ansammelndes Kondensat direkt abgeführt werden kann. Die dazu gehörigen Entwässerungsarmaturen werden entweder pneumatisch oder elektromotorisch angetrieben. Die Entwässerungsleitungen können direkt in den Kondensator, einen atmosphärischen Entspanner oder auf Sammellanzen geführt werden.

Die Erfindung möchte hier Abhilfe schaffen und ein Verfahren anbieten, bei dem eine Kondensation an einem Bauteil vermieden werden kann.

Gelöst wird diese Aufgabe durch ein Verfahren zur Vermeidung von Kondensation an einem Bauteil, wobei das Bauteil mit einem Dampf in Berührung kommt, bei dem unter einer Sattdampftemperatur ($T_{Sattdampf}$) eine Kondensation einsetzt, wobei eine Oberflächen-Temperatur ($T_{Oberfläche}$) des Bauteils ermittelt wird, wobei die Dampf-Temperatur ($T_{Dampf}$) des Dampfes ermittelt wird, wobei eine Wärm-Vorrichtung zum Erwärmen des Bauteils eingesetzt wird, wobei das Bauteil mit der Wärm-Vorrichtung derart erwärmt wird, dass die Oberflächen-Temperatur ($T_{Oberfläche}$) größer ist als die Sattdampftemperatur ($T_{Sattdampf}$). Die Sattdampftemperatur ($T_{Sattdampf}$) ist eine Funktion des Drucks und somit vom Druck abhängig.

Vorteilhafte Weiterbildungen sind in den Unteransprüchen angegeben.

Mit der Erfindung wird somit vorgeschlagen, das Ansammeln des Kondensats von vornherein zu verhindern. Dazu ist es erforderlich, sowohl die Temperatur des Dampfes ($T_{Dampf}$) als auch die Temperatur des Bauteils ($T_{Oberfläche}$) zu ermitteln. Dies könnte durch Messungen oder durch Berechnung geschehen. Des Weiteren muss ermittelt werden, bei welcher Temperatur der Dampf kondensiert. Dies wäre dann möglich, sofern die Dampftemperatur die Sattdampftemperatur $T_{(sattdampf)}$ erreicht. Somit wird erfindungsgemäß vorgeschlagen, in einer Anlage, bei der ein Bauteil mit einem heißen Dampf in Berührung kommt, regelmäßig die Dampftemperatur und eine Oberflächentemperatur des Bauteils zu ermitteln und diese zu vergleichen. Sofern die Bauteiltemperatur niedriger ist als die Sattdampftemperatur, muss mit einer Wärm-Vorrichtung das Bauteil derart erwärmt werden, dass die Oberflächen-Temperatur sich erhöht, und zwar derart erhöht, dass die Oberflächentemperatur über der Sattdampftemperatur liegt. Sofern dies erfolgt ist, ist eine Kondensation des Dampfes an dem Bauteil nicht mehr möglich. In solch ausgebildeten Anlagen kann eine Entwässerung gänzlich entfallen.

In einer vorteilhaften Weiterbildung wird ein Automatisierungsgerät verwendet, das die Oberflächen-Temperatur und Dampf-Temperatur miteinander vergleicht und die Wärm-Vorrichtung derart regelt, dass gilt:

$$T_{Oberfläche} > T_{Sattdampf}$$

In einer vorteilhaften Weiterbildung wird die Wärm-Vorrichtung als elektrische Heizmatte ausgebildet und um die Bauteile angeordnet. Die elektrische Heizmatte wird derart geregelt, dass ein möglichst guter Wärmekontakt zu einer Aufheizung des Bauteils führt.

Erfindungsgemäß ist das Bauteil als Außengehäuse einer Dampfturbine ausgebildet.

Ein weiteres Bauteil das erfindungsgemäß mit einer Wärmevorrichtung ausgebildet werden kann, ist das Innengehäuse einer solchen Dampfturbine. Der Wärmeübergang zwischen dem Innengehäuse und dem Rotor erfolgt hauptsächlich durch Strahlung. Daher müssen nicht alle Komponenten mit einer Wärmevorrichtung ausgestattet werden.

Erfindungsgemäß wird der Rotor einer solchen Dampfturbine mit einer Wärmvorrichtung ausgebildet, um ebenfalls eine Kondensation zu verhindern.

Erfindungsgemäß ist das Bauteil als Komponente eines Dampferzeugers ausgebildet.

Ein weiteres erfindungsgemäßes Bauteil ist ein Ventil, das mit einer Wärmvorrichtung ausgebildet wird.

Erfindungsgemäß wird eine Klappe mit der Wärm-Vorrichtung ausgebildet.

Des Weiteren wird erfindungsgemäß eine Rohrleitung, die eine Komponente eines Dampferzeugers darstellen könnte, mit einer Wärmvorrichtung ausgebildet.

Erfindungsgemäß kann die elektrische Heizung als Widerstandsheizung oder als Induktionsheizung ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:

Figur 1     eine Draufsicht auf einen Teil einer Dampfturbine

Figur 2     eine Schnittansicht durch eine Dampfturbine

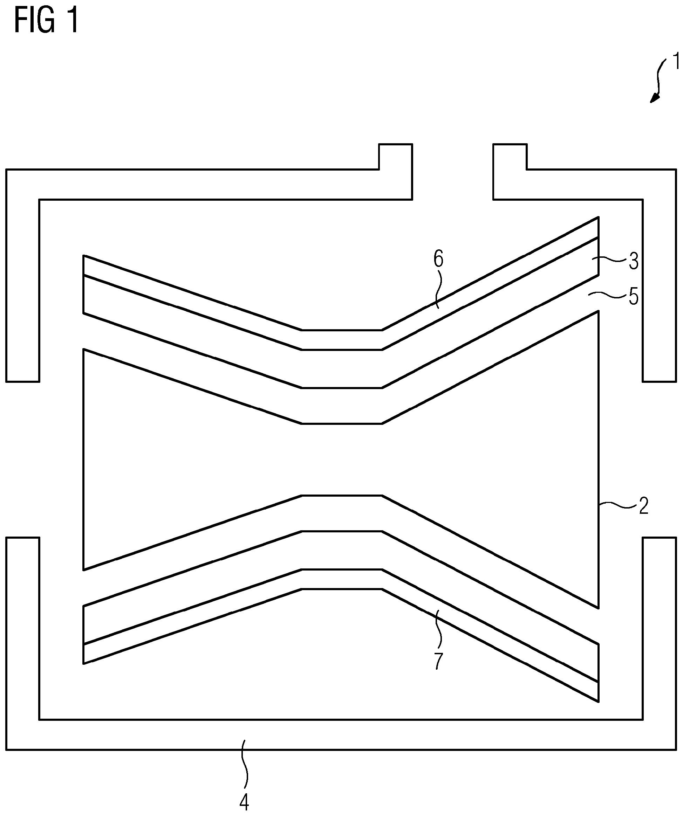

Die Figur 1 zeigt eine Dampfturbine 1, die im Wesentlichen aus einem drehbar gelagerten Rotor 2 und ein um den Rotor 2 angeordnetes Innengehäuse 3 aufweist. Um das Innengehäuse 3 ist ein Außengehäuse 4 angeordnet. Der Rotor 2 umfasst nicht näher dargestellte Laufschaufeln. Das Innengehäuse 3 umfasst nicht näher dargestellte Leitschaufeln. Zwischen dem Rotor 2 und dem Innengehäuse 4 ist ein Strömungskanal 5 ausgebildet, durch den im Betrieb ein heißer Dampf strömt. Es sind Betriebszustände möglich, bei dem die Temperatur der Welle, des Innengehäuses 3 und des Außengehäuses 4 derart sind, dass der Dampf, der mit dem vorgenannten Komponenten in Berührung kommt, kondensieren könnte, sofern die Oberflächen-Temperatur ($T_{Oberfläche}$) kleiner ist als die Sattdampftemperatur des Dampfes. Um eine Kondensation zum Beispiel am Innengehäuse 3 zu vermeiden, wird eine Wärm-Vorrichtung 6, die als elektrische Heizmatte 7 ausgebildet sein kann, angeordnet. Die elektrische Heizmatte heizt das Innengehäuse 3 derart auf, dass die Oberflächentemperatur ($T_{Oberfläche}$), die mit dem Dampf in Berührung kommt, größer ist als die Sattdampftemperatur ($T_{satt-dampf}$). Dadurch wird eine Kondensation an der Oberfläche des Innengehäuses verhindert.

Dazu ist es erforderlich, dass die Dampf-Temperatur ($T_{Dampf}$) regelmäßig ermittelt wird, was durch Messung oder durch Rechnung erfolgen kann. Des Weiteren muss die Dampf-Temperatur ($T_{Dampf}$) regelmäßig mit der Oberflächen-Temperatur ($T_{Oberfläche}$) verglichen werden. Die Wärm-Vorrichtung 6 muss dann das Bauteil erwärmen, sofern die Oberflächen-Temperatur ($T_{Oberfläche}$) größer ist als die Sattdampftemperatur ($T_{Sattdampf}$). Hierbei genügt es, wenn die Oberflächen-Temperatur ($T_{Oberfläche}$) kaum größer ist als die Sattdampftemperatur ($T_{Sattdampf}$) : $T_{Oberfläche} - T_{Sattdampf}) > 0$.

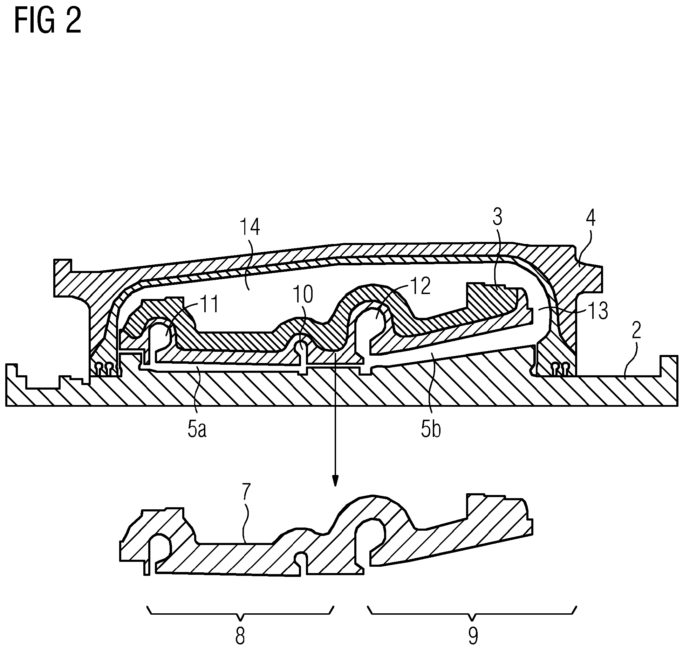

Figur 2 zeigt eine Schnittdarstellung durch eine Dampfturbine, die einen ersten Beschaufelungsbereich 8 und einen zweiten Beschaufelungsbereich 9 aufweist. Die Dampfturbine gemäß Figur 2 weist einen ersten Einströmbereich 10 und einen ersten Ausströmbereich 11 auf. In den ersten Einströmbereich 10 strömt ein heißer Dampf in einen ersten Strömungskanal 5a und von dort aus dem ersten Ausströmbereich 11 zu einem Zwischenüberhitzer (nicht dargestellt). Im Zwischenüberhitzer wird der Dampf wieder auf eine höhere Temperatur gebracht und in einen zweiten Einströmbereich 12 der Dampfturbine eingeströmt. Der Dampf strömt vom zweiten Einströmbereich 12 durch einen zweiten Strömungskanal 5b zu einem Ausströmbereich 13. Der in den Ausströmbereich 13 strömende Dampf verteilt sich in einem Zwischenraum 14 zwischen dem Innengehäuse 3 und dem Außengehäuse 4. Um das Innengehäuse 3 wird die Heizmatte 7 angeordnet. Die Heizmatte 7 weist dabei dieselbe Geometrie auf wie das Innengehäuse 3. Das bedeutet, dass das Innengehäuse 3 nahezu komplett mit der Heizmatte 7 sozusagen eingehüllt ist. Der Bereich der Beschaufelung kann dabei frei bleiben. Eine Übertragung der thermischen Energie der Heizmatte 7 auf das Innengehäuse 3 ist dadurch optimal möglich.

Das Bauteil, das mit einer Wärm-Vorrichtung erhitzt werden kann, könnte auch eine Komponente eines Dampferzeugers sein.

Des Weiteren kann auf die Wärm-Vorrichtung 6 auch ein Ventil angeordnet werden. In einer weiteren Ausbildung der Erfindung kann die Wärm-Vorrichtung 6 auf eine Klappe angeordnet werden.

Des Weiteren kann in einer Dampfkraftanlage, in der vergleichsweise viele Rohrleitungen eingesetzt werden, die Rohrleitungen mit der Wärm-Vorrichtung 6 ausgebildet werden, die mit dem heißen Dampf in Berührung kommen.

Obwohl die Erfindung im Detail durch das bevorzugte Ausführungsbeispiel näher illustriert und beschrieben wurde, so ist die Erfindung nicht durch die offenbarten Beispiele eingeschränkt. Andere Variationen können vom Fachmann hieraus abgeleitet werden, ohne den Schutzumfang der Erfindung zu verlassen.

**Patentansprüche**

1. Verfahren zur Vermeidung von Kondensation an einem Bauteil (2, 3, 4), wobei das Bauteil (2, 3, 4) mit einem Dampf in Berührung kommt, bei dem unter einer Sattdampftemperatur ($T_{sattdampf}$) eine Kondensation einsetzt, wobei eine Oberflächen-Temperatur ($T_{Oberfläche}$) des Bauteils (2, 3, 4) ermittelt wird, wobei die Dampf-Temperatur ($T_{Dampf}$) des Dampfes ermittelt wird,
   wobei eine Wärm-Vorrichtung (6, 7) zum Erwärmen des Bauteils (2, 3, 4) eingesetzt wird,
   **dadurch gekennzeichnet, dass**
   das Bauteil (2, 3, 4) mit der Wärmvorrichtung (6, 7) derart erwärmt wird, dass die Oberflächentemperatur ($T_{Oberfläche}$) größer ist als die Sattdampftemperatur ($T_{Satt-dampf}$).

2. Verfahren nach Anspruch 1,
   wobei eine Automatisierungseinheit verwendet wird, die die Oberflächentemperatur und Dampftemperatur miteinander vergleicht und die Wärm-Vorrichtung (6) derart regelt, dass gilt: $T_{(oberfläche)} > T_{(Sattdampf)}$.

3. Verfahren nach Anspruch 1 oder 2,
   wobei die Wärm-Vorrichtung (6) als elektrische Heizmatte (7) ausgebildet wird.

4. Verfahren nach einem der Ansprüche 1, 2 oder 3,
   wobei das Bauteil (2, 3, 4) als Außengehäuse (4) einer Dampfturbine ausgebildet wird.

5. Verfahren nach einem der Ansprüche 1 - 4,
   wobei das Bauteil als Innengehäuse (3) einer Dampfturbine ausgebildet wird.

6. Verfahren nach einem der Ansprüche 1 - 5,
   wobei das Bauteil als Rotor (2) einer Dampfturbine ausgebildet wird.

7. Verfahren nach einem der Ansprüche 1 - 6,
   wobei das Bauteil als Komponente eines Dampferzeugers ausgebildet wird.

8. Verfahren nach einem der Ansprüche 1 - 7,
   wobei das Bauteil als Ventil, insbesondere Dampfventil ausgebildet wird.

9. Verfahren nach einem der Ansprüche 1 - 8,
   wobei das Bauteil als Klappe ausgebildet wird.

10. Verfahren nach einem der Ansprüche 1 - 9,
    wobei das Bauteil als Rohrleitung ausgebildet ist.

FIG 1

FIG 2

**Europäisches Patentamt**
**European Patent Office**
**Office européen des brevets**

# EUROPÄISCHER RECHERCHENBERICHT

**Nummer der Anmeldung**

EP 17 19 2539

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/251304 A1 (MARUYAMA TAKASHI [JP]) 4. Oktober 2012 (2012-10-04) * Absätze [0021] - [0027] * ----- | 1,2 | INV. F01K13/00 F01D25/10 |
| X | US B 451 248 I5 (PATEL NEVILLE K) 2. März 1976 (1976-03-02) * Spalte 4, Zeile 57 - Spalte 5, Zeile 58; Abbildungen 1,2 * ----- | 1 | |
| X | DE 10 2014 214663 A1 (SIEMENS AG [DE]) 28. Januar 2016 (2016-01-28) * Absatz [0020]; Ansprüche 1-3; Abbildung 1 * ----- | 1,3-10 | |
| X | US 2011/265475 A1 (KOLLER MARTIN [CH]) 3. November 2011 (2011-11-03) * Absätze [0015] - [0020] * ----- | 1 | |
| A | EP 2 492 456 A1 (SIEMENS AG [DE]) 29. August 2012 (2012-08-29) * das ganze Dokument * ----- | 1-10 | |
| A | US 5 131 230 A (BARTON SERGE P [US] ET AL) 21. Juli 1992 (1992-07-21) * das ganze Dokument * ----- | 1-10 | RECHERCHIERTE SACHGEBIETE (IPC) F01K F01D |
| A | DE 10 2011 005126 A1 (SIEMENS AG [DE]) 6. September 2012 (2012-09-06) * das ganze Dokument * ----- | 1-10 | |
| A | EP 1 156 189 A1 (SIEMENS AG [DE]) 21. November 2001 (2001-11-21) * das ganze Dokument * ----- | 1-10 | |

Der vorliegende Recherchenbericht wurde für alle Patentansprüche erstellt

| Recherchenort | Abschlußdatum der Recherche | Prüfer |
|---|---|---|
| München | 10. April 2018 | Röberg, Andreas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 19 2539

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-04-2018

| Im Recherchenbericht angeführtes Patentdokument | Datum der Veröffentlichung | Mitglied(er) der Patentfamilie | Datum der Veröffentlichung |
|---|---|---|---|
| US 2012251304    A1 | 04-10-2012 | CN    103282606 A<br>EP       2634378 A1<br>JP       5055451 B1<br>JP    2012215104 A<br>KR  20130084700 A<br>US    2012251304 A1<br>WO    2012132826 A1 | 04-09-2013<br>04-09-2013<br>24-10-2012<br>08-11-2012<br>25-07-2013<br>04-10-2012<br>04-10-2012 |
| US B451248       I5 | 02-03-1976 | IT       1034197 B<br>JP     S5436163 Y2<br>JP     S5476402 U<br>US       B451248 I5 | 10-09-1979<br>01-11-1979<br>31-05-1979<br>02-03-1976 |
| DE 102014214663 A1 | 28-01-2016 | KEINE | |
| US 2011265475    A1 | 03-11-2011 | CN    102235186 A<br>DE 102011018935 A1<br>JP    2011236905 A<br>US    2011265475 A1 | 09-11-2011<br>03-11-2011<br>24-11-2011<br>03-11-2011 |
| EP 2492456       A1 | 29-08-2012 | EP       2492456 A1<br>PL       2492456 T3 | 29-08-2012<br>31-10-2016 |
| US 5131230       A | 21-07-1992 | CA       2071363 A1<br>US       5131230 A | 18-12-1992<br>21-07-1992 |
| DE 102011005126 A1 | 06-09-2012 | DE 102011005126 A1<br>EP       2495403 A2 | 06-09-2012<br>05-09-2012 |
| EP 1156189       A1 | 21-11-2001 | KEINE | |

Für nähere Einzelheiten zu diesem Anhang : siehe Amtsblatt des Europäischen Patentamts, Nr.12/82